(19) Europäisches Patentamt
European Patent Office
Office européen des brevets

(11) **EP 4 429 094 A1**

(12) **EUROPEAN PATENT APPLICATION**

(43) Date of publication:
**11.09.2024 Bulletin 2024/37**

(21) Application number: **23161148.4**

(22) Date of filing: **10.03.2023**

(51) International Patent Classification (IPC):
**H02M 3/335** (2006.01)      **H02M 1/32** (2007.01)

(52) Cooperative Patent Classification (CPC):
**H02M 1/0025; H02M 1/32; H02M 3/33507; H02M 3/33523**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Infineon Technologies Austria AG**
**9500 Villach (AT)**

(72) Inventors:
 • **LOHAUS, Lukas**
 **45128 Essen (DE)**

 • **SCHAEMANN, Marcus**
 **82024 Taufkirchen (DE)**
 • **LUX, Thomas**
 **40882 Ratingen (DE)**
 • **FAHLENKAMP, Marc**
 **82538 Geretsried (DE)**
 • **TEO, Yong Siang**
 **797501 Singapore (SG)**

(74) Representative: **Kraus & Lederer PartGmbB**
**Thomas-Wimmer-Ring 15**
**80539 München (DE)**

(54) **POWER CONVERTER CONTROLLER, POWER CONVERTER AND METHODS OF OPERATING A POWER CONVERTER**

(57) A secondary side controller (10) for a power converter is provided. The controller (10) has an input (11) configured to receive a signal (sf) indicative of a switching frequency of a primary side switch of the power converter, and a control logic (12) configured to control the power converter to limit the input and output power of the power converter based on the signal (sf).

Fig. 1

**Description**

TECHNICAL FIELD

The present application relates to power converter controllers, power converters and to corresponding methods.

BACKGROUND

Power converters are used in many applications to convert an input electrical power to an output electrical power, which is appropriate for respective appliances or devices with respect to voltage, current or both. For example, charger devices for smartphones or tablets or power supplies for computers, laptops and a plurality of other devices convert an input power, typically a mains power, to an appropriate output power (voltage and current). For instance, the mains power typically is an AC (alternating current) power with a voltage ranging between 100 volt and 300 volts depending on country, and output voltages required may be in a range from 3 volt to 20 volt DC (direct current), depending on application. The above input and output voltage values are merely examples, and higher or lower values may also be used, depending on application. Power converters may include more than one stage.

Power converters are typically designed for a maximum load, i.e. a maximum power drawn on an input side, resulting in a maximum power output at an output side of the power converter. Overload conditions, where a power converter handles more power than it is designed for, may lead to damage or destruction of the power converter and may be hazardous, for example as heat generated may start a fire. One way to avoid this problem is over-dimensioning the power converter, i.e. designing the power converter for significantly higher powers than it is intended to handle in use. However, such an over-dimensioning may be costly, as more expensive components may be required. Another approach is to build in a power limitation mechanism like overcurrent detection or overvoltage detection.

For applications below 100 W, in particular below 75 W, isolated flyback power converters are frequently used. In flyback power converters with quasi resonant control the switching frequency is significantly depending on the output load conditions and the input voltage. In such flyback converters, a primary side power switch is used to selectively provide power to a circuit portion including a primary winding of a transformer, and the timing for turning on the power switch depends on the demagnetization-time and therefore on the load conditions. After full demagnetization, the voltage and current of inductances (e.g. of the transformer) and capacitances (e.g. output capacitance of the primary side switch) oscillate. Quasi-resonant control means that a primary side switch of the power converter is turned on at a time in which the voltage across the primary side switch is close to zero. The exact timing depends on the resonance frequency of inductance and capacitance. The on-time of the primary switch is depending on the input voltage. In such an operation, in which the switching frequency of the primary power switch is not fixed, a limitation of the maximum power conversion based on the fixed frequency is not possible. For quasi resonant control , in conventional solutions control schemes are used, which limit the maximum peak current. Such power limitation concepts are generally based on a current mode control via measurements of the drained current of the power switch, for which a shunt resistor is used. In such an approach, the power limitation may have some dependency on the input voltage. Moreover, due to the required drain current measurement on the primary side (input side), the power limitation also must be implemented on the primary side, or the drain current measurement has to be communicated to the secondary side.

SUMMARY

A secondary side controller for a power converter as defined in claim 1, a power converter as defined in claim 14 and a method as defined in claim 15 are provided. The dependent claims define further embodiments.

According to an embodiment, a secondary side controller for a power converter is provided, comprising:

> an input configured to receive a signal indicative of a switching frequency of a primary side switch of the power converter; and
> control logic configured to control the power converter to limit the input and output power of the power converter based on the signal indicative of the switching frequency.

In a further embodiment, a power converter comprising such a secondary side controller on a secondary side thereof is provided.

According to a further embodiment, a method is provided, comprising:

> receiving, at a secondary side of a power converter, a signal indicative of a switching frequency of a primary side switch of the power converter, and
> controlling the power converter to limit the input power and output power of the power converter based on the signal.

The above summary gives merely an overview over some implementations and is not to be construed as limiting.

BRIEF DESCRIPTION OF THE DRAWINGS

Fig. 1 is a block diagram of a secondary side controller for a power converter according to an embodiment.

Fig. 2 is a flowchart illustrating a method according to some embodiments.

Fig. 3 illustrates various implementation possibilities usable in the method of Fig. 2.

Fig. 4 is a block diagram of a power converter according to an embodiment.

Fig. 5 is a block diagram of a power converter according to an embodiment.

Fig. 6 is a diagram of a power converter according to an embodiment.

Figures 7 and 8 are signal diagrams for illustrating operation of a power converter according to some embodiments.

Fig. 9 is a diagram of a power converter according to an embodiment.

DETAILED DESCRIPTION

In the following, various embodiments will be described in detail referring to the attached drawings. These embodiments are given by way of example only and are not to be construed as limiting in any way.

While embodiments are described including a plurality of features (elements, components, steps, acts, events, signals etc.), in other embodiments some of these features may be omitted or may be replaced by alternative features. For example, some embodiments are described in the context of specific types of power converters, in particular specific types of flyback converters, but techniques discussed herein may also be applied to other kinds of power converters. Furthermore, in addition to the features explicitly shown and described, further features may be provided, for example features of conventional resonant or quasi resonant power converters and associated methods. For instance, the present application focusses on power limitation for power converters, and other features of power converters may be implemented in any conventional manner, for example the general configuration of the power converter or the operation of the power converter apart from the power limitation, for example regulation of an output power or output current.

Features from different embodiments may be combined to form further embodiments. Variations, modifications or details described with respect to one of the embodiments are also applicable to other embodiments and will therefore not be described repeatedly. In the figures, like or corresponding elements bear the same reference numerals and will therefore not be described repeatedly in detail.

Connections or coupling described herein refer to electrical connections or couplings unless noted otherwise. Such connections or couplings as shown in the drawings or described herein may be modified, for example by the addition or removal of components, as long as the general function of the connection or coupling, for example to provide a certain kind of signal, to provide a voltage, to provide power etc. is essentially maintained.

Embodiments discussed herein include switches, for example a primary side switch of a power converter. A switch is referred to as off or open if it essentially provides an electrical isolation between its terminals, and is referred to as on or closed when it provides a low ohmic conducting power path between its terminals. Switches are usually implemented as transistors, for example field effect transistors, bipolar junction transistors or insulated gate bipolar transistors. To increase voltage handling capabilities of such a switch, a plurality of transistor cells may be coupled in series, and/or to increase current handling capabilities, a plurality of transistor cells may be coupled in parallel. Therefore, while in some embodiments discussed herein switches are depicted as single transistors, this is not be construes as limiting, in other switch implementations using other types of transistors or a plurality of transistor cells may also be used.

It should be noted that the operation of a transistor may deviate from the above ideal behaviour (open/closed) to some extent. For example, a transistor may be operated in a linear range, such that in the off-state there is still some current flowing, and in the on-state there is still some electrical resistance. However, also in this case, the electrical resistance in the off-state is significantly higher than in the on-state, for example at least a factor of 2 higher, at least a factor of 5 higher, at least a factor of 10 higher or at least a factor of 100 higher. Such non-ideal on- and offstates still fall under the terms on/closed or off/open as defined above.

Embodiments discussed herein relate to power converters having an isolated topology, i.e. a galvanic isolation between a primary side and a secondary side. The techniques discussed herein for power limitation may be applied to power converters with secondary side control and variable switching frequency of a primary side switch in a discontinuous mode. Such a power converter has a primary side which is galvanically insulated from the secondary side, for example by a transformer or other types of galvanic isolation like capacitors. The primary side receives an input electrical power, and the secondary side outputs an output electrical power of the power converter. The term primary side controller relates to a controller provided on the primary side, and the term secondary side controller relates to a controller provided on the secondary side. A secondary side controller may communicate with a primary side controller over the galvanic isolation using appropriate communication techniques, for example communication using a light emitting diode and a phototransistor. In some embodiments, the primary side may include one or more primary side switches, which are operated to selectively provide power from the primary side to the secondary side. For example, one or more of such primary side switches, also refer to as primary side power switches, may be operated according to a pulse width modulation scheme. In some implementations, a control signal for this pulse width modulation scheme may be generated by a secondary side controller and provided to a primary side controller, which then operates the primary side switches.

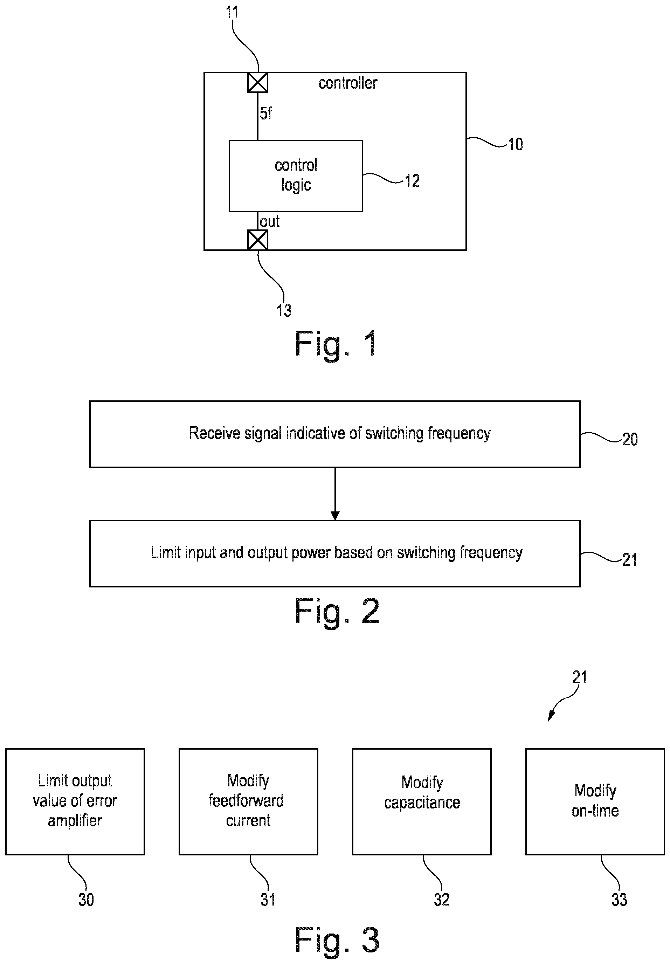

Turning now to the figures, Fig. 1 is a block diagram of a secondary side controller 10 according to an embodiment, configured to be used in a power converter having an isolated topology.

Controller 10 of Fig. 1 comprises a terminal 11 which is configured to receive a signal sf indicative of a switching frequency $f_{sw}$ of a primary side switch of the power converter. For example, a voltage on the secondary side may exhibit a waviness or periodicity corresponding to the switching frequency and therefore may serve as a signal indicative of the switching frequency on the primary side. In other embodiments, for example a current on the secondary side may be used, or a signal derived from a voltage on the secondary side for example by means of a voltage divider. It should be noted that the measurement, determination and use of the switching frequency is equivalent to the determination, and use of the switching period $T_{sw}=1/f_{sw}$. Therefore, recitations defining a determination of or depending on the switching frequency also include the possibility to use the switching period instead.

A control logic 12 of controller 10 then controls the power converter such that the input power and output power of the power converter are limited based on signal sf and therefore based on the switching frequency. The combination of input power and output power may also be referred to as transferred power. Control logic 12 may include analog components, digital components and combinations thereof. Digital components may for example include programmable or fixedly programmed components which perform calculations and processings on digital signals. Control logic 12 and controller 10 may for example be implemented using an application specific integrated circuit (ASIC), a correspondingly programmed or implemented microcontroller, or the like.

In an embodiment, an output signal out is used to control the power converter accordingly. In some embodiments, output signal out may include a pulse width modulated (PWM) control signal which is transferred to a primary side of the power converter to control a primary side switch. Specific examples for such a control will be discussed further below. With such a controller, a limitation of the input and output power without using a shunt resistor may be implemented.

Fig. 2 is a flowchart illustrating a method according to an embodiment. The method of Fig. 2 may for example be implemented using controller 10 of Fig. 1.

At 20 in Fig. 2, the method comprises receiving a signal indicative of a switching frequency of a primary side switch of the power converter, for example a voltage or current signal on the secondary side, from which the switching frequency may be derived.

At 21, the method comprises limiting the input and output power of the power converter based on the signal, i.e. effectively based on the switching frequency. For this, in some implementations the switching frequency may be directly determined from the signal, whereas in other embodiments the signal may be processed to generate signals or values limiting the input and output value, such that the switching frequency is implicitly used.

Fig. 3 shows various examples how the limiting of the input and output power of 21 of Fig. 2 may be performed. In some embodiments, an error amplifier comparing the output voltage to a reference value may be used for regulation of the power converter. At 30, for limiting the input and output power, the output of the error amplifier is limited to a specific range based on the signal indicative of the switching frequency.

In other embodiments, at 31 a feedforward current used for regulation may be modified. In still other embodiments, a pulse width modulated control signal for controlling a primary side switch may be generated based on charging a capacitor, and for limiting the input and output power at 32 the capacitance of the capacitor may be modified based on the signal.

These approaches indirectly modify a control signal like a PWM signal for a primary side switch, by modifying or limiting values (output value of the error amplifier, feedforward current or capacitance) which in turn influence the control signal. In other embodiments, at 33 an on-time of such a PWM control signal may be modified directly, which may in particular be done in digital implementations. Examples for these approaches will be explained next using some example embodiments.

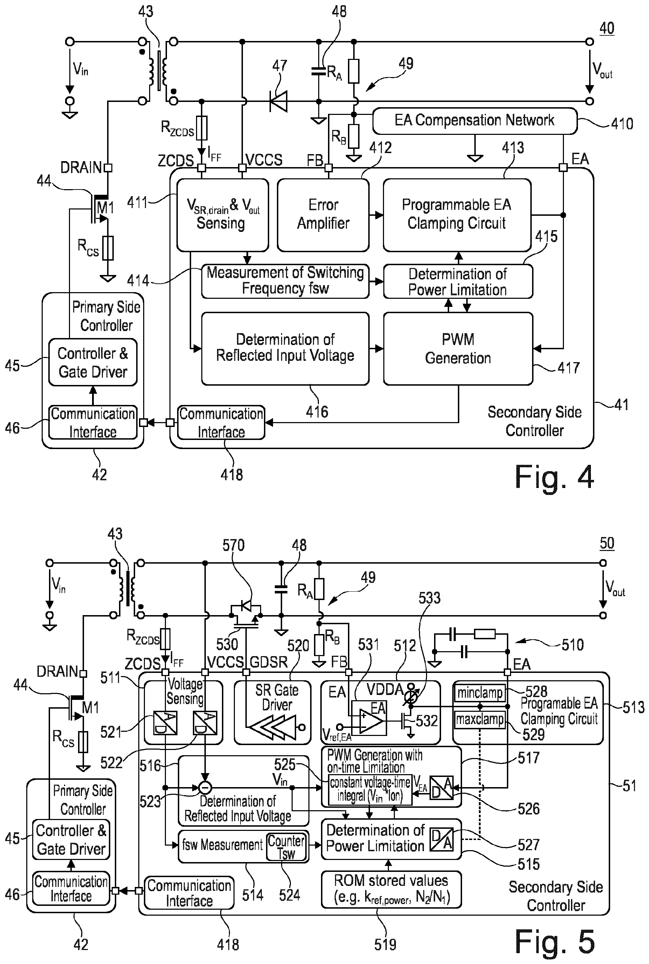

Fig. 4 is a block diagram of a power converter 40 according to an embodiment. Power converter 40 includes a primary side and a secondary side separated by a transformer 43. The primary side receives an input power at an

input voltage $V_{in}$, and the secondary side outputs an output power at an output voltage $V_{out}$.

On the primary side, a primary side switch 44 is provided, controlled by a controller and gate driver 45 of a primary side controller 42. By selectively opening and closing primary side switch 44, also labelled M1, a current through a primary side winding of transformer 43 may be selectively switched on or off, which in turn induces a current on the secondary side of power converter 40 and therefore transfers power to the secondary side. In the embodiment of Fig. 4, primary side switch 44 is controlled by a pulse width modulated (PWM) signal, which is generated by a secondary side controller 41 and communicated to primary side controller 42 via communication interfaces 418, 46. Communication interfaces 46, 418 may be integrated in controllers 42, 41, respectively (for example in a respective ASIC), or may be provided externally to controllers 42, 41, for example as an optocoupler. For example, in some implementations using such an optocoupler, communication interface 46 may include a phototransistor, and communication interface 418 may include a light emitting diode (LED), to transfer information regarding the PWM signal from secondary side controller 41 to primary side controller 42. Other conventional communication techniques maintaining the galvanic isolation provided by transformer 43 between primary and secondary side may also be used, for example capacitive or inductive coupling, which may use capacitors or inductors integrated in the respective controllers 42, 41 or external to controllers 42, 41. While in some implementation on the primary side a shunt resistor $R_{CS}$ may be provided for measuring a drain current of primary side switch 44, this is not required for the power limitation techniques discussed herein, but if desired may be used for other purposes in power converter 40.

On the secondary side, the power provided by the transformer 43 is filtered by a filter 48, for example a simple capacitor, and rectified by a rectifier element 47 represented as a diode in Fig. 4. In some embodiments, as will be explained below, instead of a diode a synchronous rectifier transistor (SR transistor) may be provided for rectification. In this way, an output voltage $V_{out}$ is generated.

Secondary side controller 41 receives a feedforward current $I_{FF}$ at a terminal ZCDS and the output voltage $V_{out}$ prior to filtering at a terminal VCCS. Furthermore, the output voltage $V_{out}$ is divided by a voltage divider 49 including resistors $R_A$ and $R_B$ to be received at a terminal FB.

The signal at ZCDS is representative of a voltage at rectifier element 47, for example a drain voltage $V_{SR,drain}$ of a synchronous rectifier transistor used as rectifier element 47, and the signal received at VCCS is representative for Vout. These two quantities are sensed in a block 411. The voltage $V_{SR,drain}$ furthermore is an example for a signal indicative of the switching frequency $f_{sw}$ of primary side switch 44, as it exhibits a waviness or periodicity corresponding to $f_{SW}$. This switching frequency $f_{SW}$ is determined in block 414. Furthermore, in a block 416, based on $V_{SR,drain}$ and $V_{out}$ as determined by block 411 the reflected input voltage $V_{in,sec}$ is determined, as will be explained further below using examples. $V_{out}$ in a regulated state is a constant needed for determining the reflected input voltage, as further explained below with reference to Fig. 5.

Based on the switching frequency $f_{SW}$, at block 415 a power limit is determined, as will be explained further below.

An error amplifier 412 receives the divided output signal via terminal FB and compares it with a reference voltage serving as a target value. The output of error amplifier 412 is representative of a deviation of the output voltage from the target value. In conventional systems, this value may be directly used for the generation of the PWM control signal in block 417, such that when the output voltage gets too low, more power is transferred to the secondary side, and if the output voltage is too high, less power is transferred to the secondary side. In the embodiment of Fig. 4, based on the determined power limitation of block 415 a programmable error amplifier clamping circuit 413 is programmed to limit an output range of error amplifier 412. As will be shown below in more detail, in this way the power can be limited.

The PWM control signal in Fig. 4 is generated based on the limited error amplifier output signal and the reflected input voltage by PWM generation block 417 and communicated to primary side controller and gate driver 45 via communication interfaces 418, 46 as already explained above, such that primary side switch 44 is controlled based thereon.

The reflected input voltage is a measure of the input voltage, and in this way the input voltage which is provided on the primary side can be measured at the secondary side.

An error amplifier compensation network 410 together with error amplifier 412 form a regulator (e.g. any combination of proportional (P), integral (I) and derivative (D) regulator) outputting a signal representing the switching pattern of primary side switch 44, as further explained below.

Next, it will be explained how the voltage output by error amplifier 412, labelled $V_{EA}$ in the following, influences the input power drawn by converter 40.

Generally, the input power $P_{in}$ is equivalent to:

$$P_{in} = \frac{1}{2} \cdot f_{SW} \cdot L \cdot I_{pri}^2 = \frac{1}{2} \cdot f_{SW} \cdot V_{in,pri} \cdot I_{pri} \cdot t_{mag} \qquad (1)$$

$I_{pri}$ is the primary side current, $f_{SW}$ is the switching frequency of a primary side switch, $V_{in,pri}$ is the peak value of the primary side voltage and $t_{mag}$ is the magnetization-time of transformer 43, which is approximately the on-time of primary side switch 44.

In some analog implementations which will be discussed further below, the PWM control signal is provided by charging an internal capacitor having a capacitance value $C_{PWM}$ based on the feedforward current $I_{FF}$, which leads to

$$V_{in,pri} = \frac{C_{PWM} \cdot R_{ZCDS}}{k_{FF}} \cdot \frac{N_1}{N_2} \cdot \frac{V_{EA}}{t_{mag}} \quad (2)$$

In equation (2), $V_{in,pri}$ is the primary side input voltage, $k_{FF}$ is a constant determining the charging amount, $R_{ZCDS}$ is the resistance of resistor $R_{ZCDS}$ of Fig. 4, and $N_1/N_2$ is the turns ratio of transformer 43. Furthermore, the following equation

$$I_{pri,pk} = \frac{V_{pri,pk} \cdot t_{mag}}{L} \quad (3)$$

is valid, where $I_{pri,pk}$ is the peak value of the input current and $V_{pri,pk}$ is the peak value of the input voltage. L is the primary side inductance of transformer 43.

Inserting equations (2) and (3) in equation (1) results in a linear relationship between the input power $P_{in}$ and error amplifier voltage $V_{EA}$:

$$P_{in} = \frac{1}{2} \cdot f_{sw} \cdot \frac{C_{PWM} \cdot R_{ZDS}}{k_{FF}} \cdot \frac{N_1}{N_2} \cdot V_{EA} \cdot \frac{V_{pri,pk}}{L} \cdot t_{mag} = \frac{1}{2} \cdot f_{sw} \cdot k_{system} \cdot V_{EA} \cdot V_{bulk} \cdot t_{PWM,on}$$

$$(4)$$

CPWM, kFF, RZCDS, N1/N2 and L are constants known by design of the system (for example the turns ratio of the transformer is known, the inductance of the transformer is known, capacitance and resistance values are known by design etc.), and therefore can be summarized in a constant ksystem above which is constant for a specific system. Vbulk essentially corresponds to Vpri,pk. Vbulk is the rectified AC input voltage after a bridge rectifier rectifying e.g. an AC mains voltage and which is stabilized by the so-called bulk capacitance. Depending on load the bulk voltage is either close to the peak AC voltage (for very low loads and big bulk capacitances) or it may have a significant ripple (for high load or small bulk capacitances). By neglecting the (small) voltage drops across the resistor $R_{CS}$ and primary side switch 44, we can approximate Vpri,pk = Vbulk

A low line condition may be used as a reference level for the power limit, i.e. a condition with low input voltage. Power converters are usually limited in the power which they can deliver to the output at low line conditions. For high line conditions (i.e. high input voltage), power converters usually can provide much higher power to the output. To limit the power to a rather fixed level in some embodiments, this limit may be set based on the lowest level all across line voltages which usually occurs at the lowest line condition, i.e. lowest input voltage. For these low line conditions parameters $V_{EA,0}$, $f_{SW,0}$, $V_{in,0}$ and $t_{PWM,on,0}$, i.e. parameters corresponding to this reference level for the power limit are given. These parameters for a given system may for example be programmed in eFuses, read only memories (ROM) or other types of storage.

In the ratio between $P_{in}$ and $P_{in,0}$, system constants cancelled out, such that

$$\frac{P_{in}}{P_{in,0}} = \frac{\frac{1}{2} \cdot f_{sw} \cdot k_{system} \cdot V_{EA} \cdot V_{bulk} \cdot t_{PWM,on}}{\frac{1}{2} \cdot f_{SW,0} \cdot k_{system} \cdot V_{EA,0} \cdot V_{bulk,0} \cdot t_{PWM,on,0}} = 1 \quad (5)$$

From this, a limit for the error amplifier voltage $V_{EA}$, labelled $V_{EA,limit}$, may be defined as

$$V_{EA,limit} = \frac{f_{SW,0} \cdot V_{EA,0} \cdot V_{bulk,0} \cdot t_{PWM,on,0}}{f_{SW} \cdot V_{bulk} \cdot t_{PWM,on}} = \frac{k_{ref,power} \cdot T_{sw}}{V_{in,sec} \cdot t_{PWM,on}} \cdot \frac{N_2}{N_1} \quad (6)$$

$T_{sw}$ is the inverse of the switching frequency $f_{SW}$, i.e. $T_{sw}=1/f_{SW}$, $V_{in,sec}$ is the reflected input voltage, and $k_{ref,power}$ is a system constant. In particular, $k_{ref,power}$ is defined as $f_{SW,0} \times V_{EA,0} \times V_{bulk,0} \times t_{PWM,on,0}$. The turns ratio $N_2/N_1$ and $k_{ref,power}$ may be stored in the device. It should be noted that $k_{ref,power}$ is essentially independent of a specific design implementation. This means that e.g. a power converter manufacturer can scale the power capability of the power converter by e.g. changing the inductance of transformer 43 or other circuit parameters and still use the same controller, as $k_{ref,power}$ is set based on parameters at some preselected operation point (e.g. low line condition as explained above), such that is independent from such circuit component variations. In some implementations, $k_{ref,power}$ may be programmable and may for example be set to different values depending on output voltage.

Therefore, the limit for the error amplifier voltage may be set based on the switching frequency $f_{SW}$ or switching period $T_{SW}$, which is the inverse of the switching frequency.

In some embodiments, as will be explained below, $V_{in,sec} \times t_{PWM.on}$ may be explicitly determined for the above formula. As explained above, $V_{in,sec}$ may be determined in block 416 based on the signals at terminals ZCDS and VCCS in secondary side controller 41. $t_{PWM,on}$ may be obtained from the PWM control signal generated by block 417.

In practical cases, when the input voltage increases, $t_{PWM,on}$ is decreased, such that the product $V_{in,sec} \times t_{PWM,on}$ (also referred to as voltage-time-integral) remains essentially constant. Therefore, in other implementations, a constant may be used for this product. The thus determined $V_{EA,limit}$ may then be used for setting the clamping limits in block 413 in Fig. 4.

As mentioned above, a secondary side controller like controller 10 of Fig. 1 or secondary side controller 41 of Fig. 4 may have digital and analog components. Fig. 5 illustrates a power converter 50 including a secondary side controller 51 with a mostly digital implementation. Components corresponding to components already described with reference to Fig. 4 bear the same reference numerals and will not be described in detail again.

In Fig. 5, rectifier element 47 of Fig. 4 is implemented as a synchronous rectifier transistor 530 with a freewheeling diode 570. Synchronous rectifier (SR) transistor 530 is controlled by an SR gate driver 520. The switching of transistor 530 may performed in a conventional manner, as known to the skilled person for SR transistors, corresponding to the switching of primary side switch 44. The compensation network 410 in the embodiment of Fig. 5 is implemented as a network 510 coupled to ground as shown. This, together with error amplifier 512, forms a PI controller

For measuring the voltage at terminals ZCDS and VCCS, in a voltage sensing block 511 two analog-to-digital converters 521, 522 are provided, to generate respective digital values. The following processing of these digital values is implemented in the digital domain, and even if for clarity separate blocks are shown, any kind of digital signal processing may be used to implement the respective functionality. For determining the reflected input voltage in $V_{in,sec}$ in a block 516, a subtractor 523 is used determining the difference between the output values of analog-to-digital converters 521, 522. For the measurement of the switching frequency, the signal output by analog-to-digital converter 521 is provided to a counter 524 which may for example count times between the reaching of threshold values, thus determining a period length of the signal. Other implementations for measuring the switching frequency may also be used, for example with a combination of a comparator and a counter without using an analog-to-digital converter. Also, in some implementations the subtractions mentioned above may be performed in the analog domain, and the result may then be digitized by an analog-to-digital converter.

PWM generation block 517 generates a PWM control signal. The PWM control causes an on-time of primary side switch 44.

A power limitation block 515 receives the on-time from PWM generation block 517, the input reflected input voltage $V_{in,sec}$ from block 516 and the switching frequency or switching period from block 514, and determines a power limit as discussed above with respect to equation (5) in form of a limit for an error voltage. This limit is provided to a clamping circuit 513 via a digital-to-analog converter 527 to set minimum and maximum clamping values 528, 529, respectively, which may be the negative and positive version of the value determined according to the above equation (5).

In other embodiments, a constant voltage time integral $V_{in,sec} \times t_{on,PWM}$, where $t_{on,PWM}$ is the on-time of the PWM control signal, may be assumed, such that the limit is only calculated based on the switching frequency/switching period. When the time voltage integral $V_{in,sec} \times t_{PWM,on}$ is assumed constant, equation (5) for computing $V_{EA,limit}$ may be simplified to

$$V_{EA,limit} = V_{EA,0} \; \frac{f_{sw,0}}{f_{sw}} \quad (6)$$

The limit for $V_{EA}$ may also, as an alternative, be digitally provided directly to PWM generation block 517, which receives the error voltage $V_{EA}$ via an analog-to-digital converter 526 and may limit the voltage digitally to the value $V_{EA,limit}$ in case it exceeds it in the course of the PWM signal generation directly.

The determination of the power limitation, as already mentioned above, uses values stored in a ROM 519 (for example provided by eFuses), for example the above values $k_{ref,power}$ and the turns ratio $N_2/N_1$.

An error amplifier block 512 receives the feedback voltage from voltage divider 49 and amplifies a difference between the feedback voltage and a reference voltage $V_{ref,EA}$ in a differential amplifier 531. The signal output by differential amplifier 531 controls the gate of a transistor 532 which may be operated in a linear regime supplied by a current source 533, to provide the error voltage $V_{EA}$. This error voltage is then clamped in programmable EA clamping circuit 513.

The PWM signal generated is then provided to primary side controller 42 as already explained with reference to Fig. 4 via communication interfaces 418, 46.

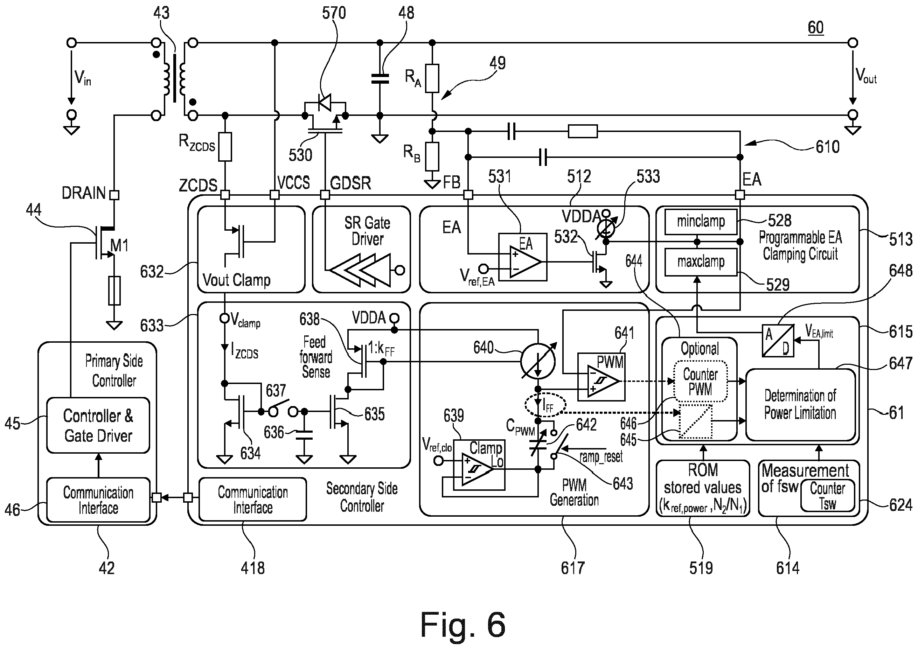

Fig. 6 shows a power converter 60 including a predominantly analog implementation of secondary side controller 61.

Again, features already explained with reference to Figures 4 or 5 bear the same reference numerals and will not be discussed again in any detail.

In Fig. 6, the compensation network is implemented as an RC network feeding an output at terminal EA back to terminal FB. This, similar to compensation network 510 of Fig. 5, forms a PI controller. If additionally a derivative (D) component is desired, a high pass filter, e.g. RC series coupling, may be provided between the output voltage Vout and terminal FB.

In Fig. 5, network 510 is coupled to ground, whereas in Fig. 6 it is coupled to terminal FB. Both possibilities may be used, depending on the implementation of the corresponding error amplifier.

In Fig. 6, the voltage across resistor $R_{ZCDS}$ is regulated to approximately equal the reflected input voltage because the voltage at terminal ZCDS is regulated to approximately the output voltage $V_{out}$ by Vout clamp 632, where terminal VCCS is coupled to a gate terminal of a transistor as shown. This results in a clamping voltage $V_{clamp}$ and a current $I_{ZCDS}$, which is transformed to a feedforward current $I_{FF}$ using a controllable current source 640 in PWM generation block 617 and essentially a switched current mirror including transistors 634, 635 with a switch 637 and a capacitor 636 and a transistor 638 coupled as shown, with a ratio between currents of $1:k_{FF}$. Switch 637 and capacitor 636 essentially provide a sample-and-hold functionality. The reflected input voltage can only be sensed on the ZCDS terminal while primary side switch 44 is closed. As this is only a fraction of time, this sample-and-hold functionality in the embodiment of Fig. 6 is used to sample the information provided by the voltage $V_{clamp}$ during (a part of) the primary side pulse and holds this constant during the remaining time. The current $I_{FF}$ is therefore representative of the reflected input voltage. In other implementations, the sample-and-hold functionality provided by switch 637 and capacitor 636 may be omitted, and capacitor 642 may be charged with the current $I_{FF}$ during times when primary side switch 44 is switched on.

The thus generated current $I_{FF}$ charges capacitor 624 with the above-mentioned capacitance $C_{PWM}$ for generation of the pulse width modulated signal using a comparator 641, which compares the voltage at capacitor 624 to the output voltage $V_{EA}$ of already discussed error amplifier 512, as clamped by block 513 as also already discussed.

With a switch 643, capacitor 642 may be reset by discharging, to be charged a new for a next PWM signal period. A clamp 639 provides an offset which ensures that the voltage ramp at capacitor 624 starts offset from 0V, which facilitates processing of the provided voltage.

For determining $V_{EA,limit}$ in a block 615, on the one hand the switching frequency $f_{sw}$ is determined in block 614, using a counter 624, similar to the use of counter 524 of block 514 in Fig. 5 As an alternative to counting the signal output by converter 521 in Fig. 5 by counter 524, counter 624 may also count the signal output by comparator 641. For the determination of the power limitation, i.e. $V_{EA,limit}$, according to the above equations, optionally in a block 644 an analog-to-digital converter 645 digitizes a value corresponding to $I_{FF}$ to serve as measure for the reflected input voltage, and a counter 646 measures the on-time $t_{on,PWM}$ of the PWM Signal, and provide the respective values together with values stored in a ROM ($k_{ref,power}$, $N_2/N_1$) or other memory to block 647. As mentioned above, in other embodiments the product of the reflected input voltage and the on-time may be assumed to be a constant and need not be measured. The thus determined limit value for the error amplifier voltage $V_{EA,limit}$ is converted to an analog value by a digital-to-analog converter 648 and used for the clamping of the error amplifier voltage in block 513 as described.

Alternatively or in addition to setting the clamp values 528, 529, the reference voltage Vref,EA fed to error amplifier 531 may be modified to limit the difference seen by error amplifier 531. In yet other embodiments, capacitor 624 may be tuneable, and by tuning capacitor the capacitance value CPWM also a limitation may be obtained, see equation (2) above, which shows that a reduction of CPWM leads to a reduction of power In particular, PWM generation 617 generates a pulse with duration $t = V_{EA} \times C_{PWM} / I_{FF}$. Instead of limiting $V_{EA}$ using a function of $T_{sw}$ or $f_{sw}$, the same can be achieved by changing $C_{PWM}$ with the same function. In still other embodiments, a maximum voltage to which capacitor 642 is charged may be limited.

In yet other embodiments, the current provided for charging capacitor 624 may be modified by controlling tuneable current source 640 as a modification of the charging current may influence the charging in a similar manner as a modification of the capacitance, but with an inverse function (as $I_{FF}$ is in the denominator for determining the pulse duration as explained above).

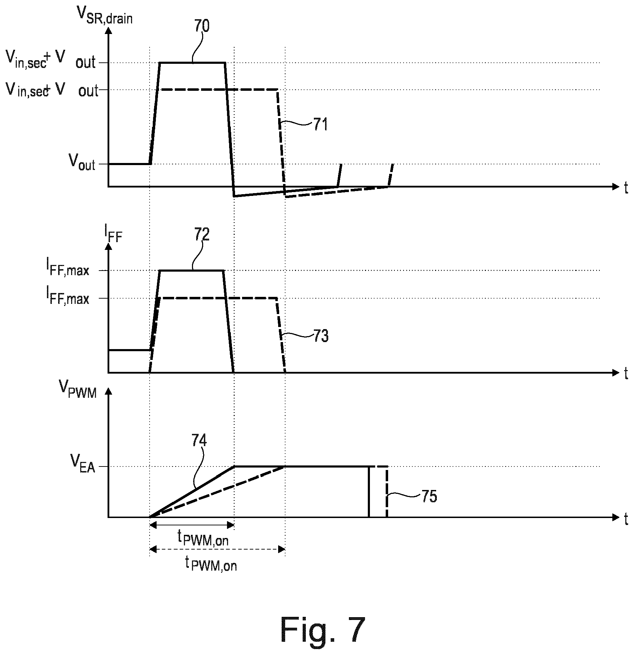

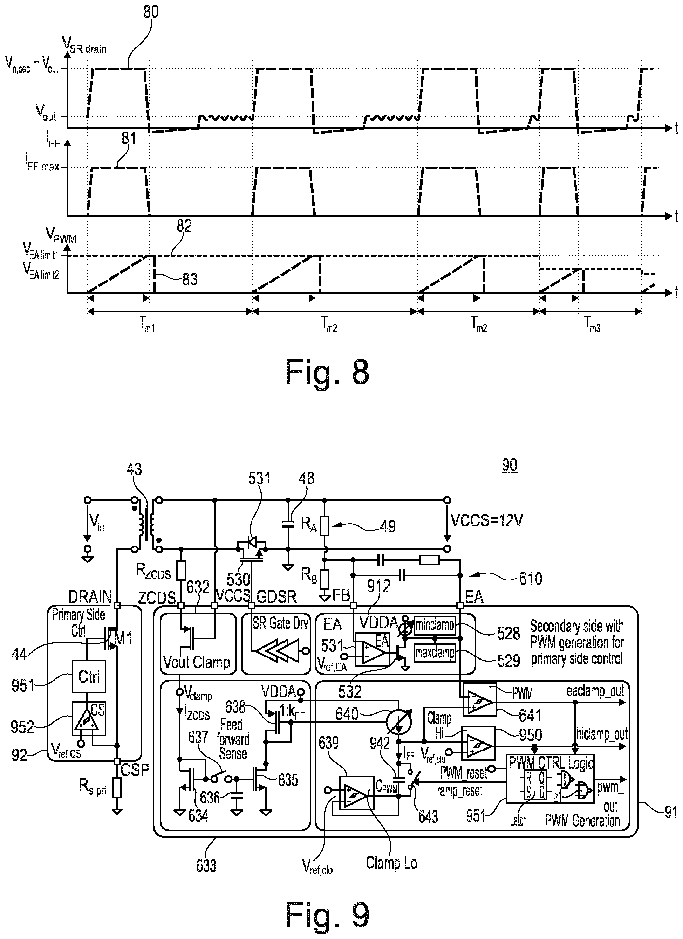

Figures 7 and 8 show signal diagrams for further illustration.

Fig. 7 illustrates how the time voltage integral mentioned above, i.e. $V_{in,sec}$ x $t_{PWM,on}$, remains essentially constant. On top, the voltage $V_{SR,drain}$ at a drain of transistor 530, as measured at ZCDS, is shown, which is the sum of $V_{in,sec}$ and $V_{out}$. A curve 70 shows a first case, and a curve 71 shows a second case with a lower voltage. Correspondingly, in the middle the feedforward current $I_{FF}$ is shown, in a curve 72 for the first case and 73 for the second case. Corresponding to the voltages according to curve 70 and 71, in the first case according to curve 72 the maximum value $I_{FF,max}$ of $I_{FF}$ is higher than for the second case. Fig. 7 illustrates the corresponding on-times generated. The on-time when charging capacitors 642 of Fig. 6 lasts until, at comparator 641, the voltage at the capacitor 642, also labelled VPWM in Fig. 7, reaches the error amplifier voltage $V_{EA}$. As with a higher current $I_{FF}$ in the first case the charging is faster, as shown by curve 74, the on-time $t_{PWM,on}$ is shorter, and for the second case according to curve 75 it is longer. Therefore, a higher reflected input current leads to higher feedforward current $I_{FF}$ and hence to a shorter on-time and vice versa, leading to the time voltage integral being approximately constant. Note that the drop of $V_{PWM}$ of curve 74 and 75 for higher times correspond to the operation of switch 643.

Fig. 8 illustrates the effects of the limitation of the voltage $V_{EA}$. Fig. 8 shows the same quantities as discussed with reference to Fig. 7, i.e. on top of the graphs of Fig. 8 the drain voltage $V_{SR,drain}$ is shown in a curve 80, in a curve 81 the feedforward current $I_{FF}$ is shown, and in a curve 83 the PWM voltage at capacitor 642 is shown. A curve 82 shows the limit of $V_{EA}$, which changes from a first value $V_{EA,limitl}$ to a second value $V_{EA,limit2}$. In the graphs, we assume that the output voltage of the error amplifier reaches this limit in both cases, i.e. that the value output by block 513 to the negative input of comparator 641 corresponds to the limit value and not to a value generated by block 512.

As can be seen from curve 83, when the limit is reduced, also the on-time is reduced, which in turn reduces the duration where the drain voltage and $I_{FF}$ have high values. This shows that both the input power drawn by the power converter and the output power output from the power converter, and therefore also the power transferred from the primary side to the secondary side, over time is reduced.

Fig. 9 illustrates a power converter 90 according to a further embodiment, which is a variation of power converter 60 of Fig. 6. Again, similar elements bear the same reference numerals and will not be discussed again.

In contrast to the primary side controllers 42 of Figures 4, 5 and 6, a primary side controller 92 of power converter 90 includes primary side switch 44. This variation may also be applied to the previous embodiments. Primary side controller 92 receives an output signal pwm_out from a secondary side controller 91, in particular a block 951 thereof, which generates the signal based on the output signal of comparator 641 already discussed. A comparator 952 may be used to protect primary side switch 44 and transformer 43 from excessively high current, which may occur in case of a shortened transformer winding or other failures, by comparing the voltage at a terminal CSP to a reference voltage as shown. A resistance $R_{S,pri}$ couples primary side controller 92 to ground. A control block 951 controls primary side switch 44 in the same manner as discussed before for controller and gate driver 45 of primary side controller 42.

In secondary side controller 91, in contrast to capacitor 642 of Fig. 6 capacitor 942 is depicted as non-adjustable, although an adjustable capacitor may also be provided. The signal provided from capacitor 924 to the positive input of comparator 641 is additionally provided to a clamping device formed by a comparator 950. Comparator 950 protects capacitor 942 against excessive charging and may also be used to limit the pulse width to a configurable level $V_{ref,clhs}$. Setting of the clamping values 528 and 529 is not explicitly shown in Fig. 9 and may be performed as in any of the previously discussed embodiments.

In addition to using them in logic 951, signals EAcomp_out and hlclamp_out may also be output to further entities and may for example be used for monitoring purposes. For example, based on these signals a digital signal processing logic may detect if the controller and hence the power converter operates normally without power limitation or operates with power limitation.

PWM control logic 951 may comprise logic elements like a latch and logic gates to process the output signal of comparators 641 to generate a PWM control signal essentially as already indicated with respect to Fig. 7, i.e. a signal that for each switching cycle is on while the voltage at capacitor 942 is below the error amplifier voltage $V_{EA}$, and low afterwards, as indicated by comparator 641.

In the embodiments above, a secondary side controller generates a PWM control signal, which is transmitted to a primary side controller for operation of a primary side switch. Due to the communication necessary, there is some delay until the effects of a modified PWM signal is seen again on the secondary side. For very short on-times, these propagation delays may contribute to a noticeable difference between on-time and magnetization time of transformer 43 due to a corresponding overshoot of the primary peak current. In some embodiments, to accommodate such cases, a propagation delay compensation is employed. In the calculation of $V_{EA,limit}$, equation (5) may be modified to account for the delay according to:

$$V_{EA,limit} = \frac{k_{ref,power} \cdot T_{SW}}{V_{in,sec} \cdot t_{pWM,on}} \frac{N_2}{N_1} - V_{EA,PDC}\left(\frac{V_{bulk} - V_{in,min}}{V_{in,max} - V_{in,min}}\right) \quad (7)$$

Vin,min and Vin,max are the minimum and maximum input voltages respectively, which are known and specified for each integrated circuit and independent of the actual system dimensioning and implementation. The propagation delay compensation value for the error amplifier limitation, in case of a digital calculation, may be programmable or selectable. The value is not entirely independent from the used components, as the propagation delay may depend on the gate capacitance of the employed transistor. The delay may be measured using a test signal, and then $V_{EA,PDC}$, which is a voltage used for compensation, may be selected appropriately.

With the techniques above, based on the switching frequency, a precise power limitation is possible. Valley switching operation is automatically accounted for, and variations of the switching frequency in a quasi-resonant converter is automatically compensated.

Some further embodiments are defined by the following examples:

Example 1. A secondary side controller for a power converter, comprising:

an input configured to receive a signal indicative of a switching frequency of a primary side switch of the power converter, and
control logic configured to control the power converter to limit the input and output power of the power converter based on the signal.

Example 2. The secondary side controller of example 1, wherein the control logic is configured to limit the input and output power based on a function of the switching frequency.

Example 3. The secondary side controller of example 2, wherein the function is further depending on a product of a secondary side input voltage of the power converter and an on-time of a primary side switch of the power converter.

Example 4. The secondary side controller of example 3, wherein the controller is configured to measure the secondary side input voltage of the power converter and the on-time of a primary side switch of the power converter.

Example 5. The secondary side controller of example 3, wherein the controller is configured to use a predefined value for the product.

Example 6. The secondary side controller of any one of examples 1 to 5, wherein the control logic is configured to determine at least one of the switching frequency or a switching period based on the signal, and to control the power converter to limit the input and output power of the power converter based on the at least one of the switching frequency or a switching period.

Example 7. The secondary-side controller of any one of examples 1 to 6, wherein the secondary side controller is configured to generate a pulse width modulated control signal for the primary-side switch of the power converter.

Example 8. The secondary side controller of example 7, wherein the secondary side controller includes an error amplifier configured to generate an error value based on an output of the power converter and a reference value, and to generate the pulse width modulated control signal based on the error value.

Example 9. The secondary side controller of example 8, wherein, to control the power converter to limit the input and output power of the power converter based on the signal, the secondary side controller is configured to limit an output value of the error amplifier.

Example 10. The secondary side controller of example 9, wherein the secondary side controller is configured to limit the output value of the error amplifier further based on a propagation delay value.

Example 11. The secondary side controller of any one of example 7 to 10, wherein the secondary side controller is configured to determine a feedforward current based on a voltage on the secondary side of the power converter, to generate the pulse width modulated control signal based on the feedforward current, and, to control the power converter to limit the input and output power of the power converter based on the signal, to modify the feedforward current.

Example 12. The secondary side controller of any one of 7 to 11 wherein the secondary side controller is configured to generate the pulse width modulated control signal based on charging a capacitor, and, to control the power converter to limit the input and output power of the power converter based on the signal, to modify a capacitance of the capacitor.

Example 13. The secondary side controller of any one of 7 to 12, wherein the secondary side controller is configured to set an on-time of the pulse width modulated control signal based on the signal to limit the input and output power of the power converter.

Example 14. The secondary side controller of any one of examples 1 to 13, wherein the secondary side controller is configured to control the power converter to provide an essentially constant output power.

Example 15. A power converter, including the secondary side controller of any one of examples 1 to 14.

Example 16. The power converter of example 15, wherein the power converter is a quasi-resonant flyback converter.

Example 17. A method, comprising:

receiving, at a secondary side of a power converter, a signal indicative of a switching frequency of a primary side switch of the power converter, and
controlling the power converter to limit the input power and output power of the power converter based on the signal.

Example 18. The method of example 17, wherein controlling the power converter to limit the input power and output power comprises limiting the input and output power based on a function of the switching frequency.

Example 19. The method of example 18, wherein the function is further depending on a product of a secondary side input voltage of the power converter and an on-time of a primary side switch of the power converter.

Example 20. The method of example 19, further comprising measuring, at the secondary side of the power converter, the secondary side input voltage of the power converter and the on-time of a primary side switch of the power converter.

Example 21. The method of example 19, further comprising using a predefined value for the product.

Example 22. The method of any one of examples 17 to 21, further comprising determining at least one of the switching frequency or a switching period based on the signal, and controlling the power converter to limit the input and output power of the power converter based on the at least one of the switching frequency or a switching period.

Example 23. The method of any one of examples 17 to 22, further comprising generating a pulse width modulated control signal for the primary-side switch of the power converter. Example 24. The method of example 23, further comprising generating an error value based on an output of the power converter and a reference value, and to generate the pulse width modulated control signal based on the error value.

Example 25. The method of example 24, wherein, to control the power converter to limit the input and output power of the power converter based on the signal, the method comprises limiting an output value of the error amplifier.

Example 26. The method of example 25, wherein limiting the output value of the error amplifier is further based on a propagation delay value.

Example 27. The method of any one of example 23 to 26, further comprising determining a feedforward current based on a voltage on the secondary side of the power converter, generating the pulse width modulated control signal based on the feedforward current, and, to limit the input and output power of the power converter based on the signal, to modify the feedforward current.

Example 28. The method of any one of 23 to 27 wherein generating the pulse width modulated control signal is based on charging a capacitor, and, to control the power converter to limit the input and output power of the power converter based on the signal, the method comprises to modifying a capacitance of the capacitor.

Example 29. The method of any one of 23 to 28, further comprising to setting an on-time of the pulse width modulated control signal based on the signal to limit the input and output power of the power converter.

Example 30. The method of any one of examples 17 to 29, further comprising control the power converter to provide an essentially constant output power.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

**Claims**

1.  A secondary side controller (10; 41; 51; 61; 91) for a power converter (40; 50; 60; 90), comprising:

    an input (11; ZCDS) configured to receive a signal (sf) indicative of a switching frequency ($f_{sw}$) of a primary side switch (44) of the power converter (10; 41; 51; 61; 91), and
    control logic (12) configured to control the power converter (40; 50; 60; 90) to limit the input and output power of the power converter (40; 50; 60; 90) based on the signal (sf).

2.  The secondary side controller (10; 41; 51; 61; 91) of claim 1, wherein the control logic is configured to limit the input and output power based on a function of the switching frequency.

3.  The secondary side controller (10; 41; 51; 61; 91) of claim 2, wherein the function is further depending on a product of a secondary side input voltage of the power converter and an on-time of a primary side switch of the power converter.

4.  The secondary side controller (10; 41; 51; 61; 91) of claim 3, wherein:

    - either the controller is configured to measure the secondary side input voltage of the power converter and the on-time of a primary side switch of the power converter;
    - or the controller is configured to use a predefined value for the product.

5.  The secondary side controller (10; 41; 51; 61; 91) of any one of claims 1 to 4, wherein the control logic (12) is configured to determine at least one of the switching frequency ($f_{sw}$) or a switching period ($T_{sw}$) based on the signal (sf), and to control the power converter (40; 50; 60; 90) to limit the input and output power of the power converter (40; 50; 60; 90) based on the at least one of the switching frequency ($f_{sw}$) or a switching period ($T_{sw}$).

6.  The secondary-side controller (10; 41; 51; 61; 91) of any one of claims 1 to 5, wherein the secondary side controller (10; 41; 51; 61; 91) is configured to generate a pulse width modulated control signal for the primary-side switch (44) of the power converter (40; 50; 60; 90).

7.  The secondary side controller (10; 41; 51; 61; 91) of claim 6, wherein the secondary side controller (10; 41; 51; 61; 91) includes an error amplifier (412, 512, 912) configured to generate an error value based on an output of the power converter (40; 50; 60; 90) and a reference value, and to generate the pulse width modulated control signal based on the error value.

8.  The secondary side controller (10; 41; 51; 61; 91) of claim 7, wherein, to control the power converter (40; 50; 60; 90) to limit the input and output power of the power converter based on the signal, the secondary side controller (10; 41; 51; 61; 91) is configured to limit an output value of the error amplifier (412, 512, 912).

9.  The secondary side controller (10; 41; 51; 61; 91) of claim 8, wherein the secondary side controller (10; 41; 51; 61; 91) is configured to limit the output value of the error amplifier further based on a propagation delay value.

10. The secondary side controller (10; 41; 51; 61; 91) of any one of claim 6 to 9, wherein the secondary side controller (10; 41; 51; 61; 91) is configured to determine a feedforward current ($I_{FF}$) based on a voltage on the secondary side of the power converter (40; 50; 60; 90), to generate the pulse width modulated control signal based on the feedforward current, and, to control the power converter (40; 50; 60; 90) to limit the input and output power of the power converter (40; 50; 60; 90) based on the signal (sf) , to modify the feedforward current.

11. The secondary side controller (10; 41; 51; 61; 91) of any one of 6 to 10 wherein the secondary side controller (10; 41; 51; 61; 91) is configured to generate the pulse width modulated control signal based on charging a capacitor (642), and, to control the power converter (40; 50; 60; 90) to limit the input and output power of the power converter (40; 50; 60; 90) based on the signal (sf), to modify a capacitance of the capacitor (642).

12. The secondary side controller (10; 41; 51; 61; 91) of any one of 6 to 11, wherein the secondary side controller (10; 41; 51; 61; 91) is configured to set an on-time of the pulse width modulated control signal based on the signal (sf) to limit the input and output power of the power converter (40; 50; 60; 90).

13. The secondary side controller (10; 41; 51; 61; 91) of any one of claims 1 to 10, wherein the secondary side controller (10; 41; 51; 61; 91) is configured to control the power converter (40; 50; 60; 90) to provide an essentially constant output power.

14. A power converter (40; 50; 60; 90), including the secondary side controller (10; 41; 51; 61; 91) of any one of claims 1 to 13.

15. A method, comprising:

receiving, at a secondary side of a power converter (40; 50; 60; 90), a signal (sf) indicative of a switching frequency ($f_{sw}$) of a primary side switch (44) of the power converter (40; 50; 60; 90), and
controlling the power converter (40; 50; 60; 90) to limit the input power and output power of the power converter based on the signal (sf).

11

controller

5f

control
logic

12

out

13

10

# Fig. 1

Receive signal indicative of switching frequency

20

Limit input and output power based on switching frequency

21

# Fig. 2

21

| Limit output value of error amplifier | Modify feedforward current | Modify capacitance | Modify on-time |
|---|---|---|---|

30

31

32

33

# Fig. 3

Fig. 4

Fig. 5

Fig. 6

Fig. 7

Fig. 8

Fig. 9

## EUROPEAN SEARCH REPORT

**Application Number**

EP 23 16 1148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 651 753 B1 (KHAMESRA ARUN [IN] ET AL) 12 May 2020 (2020-05-12) * column 5, line 5 – column 12, line 33; figures 2-3 * | 1-15 | INV. H02M3/335 H02M1/32 |
| X | US 10 193 458 B2 (MICROCHIP TECH INC [US]) 29 January 2019 (2019-01-29) * column 7, lines 35-49; figures 1, 2 * | 1,15 | |
| A | WO 2019/168399 A2 (ELDOLAB HOLDING BV [NL]) 6 September 2019 (2019-09-06) * the whole document * | 1-15 | |
| A | WO 2017/089120 A1 (PHILIPS LIGHTING HOLDING BV [NL]) 1 June 2017 (2017-06-01) * the whole document * | 1-15 | |

**TECHNICAL FIELDS SEARCHED (IPC)**

H02M

The present search report has been drawn up for all claims

| Place of search | Date of completion of the search | Examiner |
|---|---|---|
| The Hague | 21 July 2023 | van Wesenbeeck, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

**EP 23 16 1148**

This annex lists the patent family members relating to the patent documents cited in the above-mentioned European search report.
The members are as contained in the European Patent Office EDP file on
The European Patent Office is in no way liable for these particulars which are merely given for the purpose of information.

**21-07-2023**

| Patent document cited in search report | | Publication date | Patent family member(s) | | Publication date |
|---|---|---|---|---|---|
| US 10651753 | B1 | 12-05-2020 | US | 10651753 B1 | 12-05-2020 |
| | | | US | 2020412264 A1 | 31-12-2020 |
| US 10193458 | B2 | 29-01-2019 | CN | 107112889 A | 29-08-2017 |
| | | | CN | 110601524 A | 20-12-2019 |
| | | | EP | 3221955 A1 | 27-09-2017 |
| | | | JP | 2017536076 A | 30-11-2017 |
| | | | KR | 20170086531 A | 26-07-2017 |
| | | | TW | 201630319 A | 16-08-2016 |
| | | | US | 2016149504 A1 | 26-05-2016 |
| | | | US | 2018109197 A1 | 19-04-2018 |
| | | | WO | 2016081803 A1 | 26-05-2016 |
| WO 2019168399 | A2 | 06-09-2019 | CA | 3092444 A1 | 06-09-2019 |
| | | | EP | 3760006 A2 | 06-01-2021 |
| | | | US | 2021006168 A1 | 07-01-2021 |
| | | | WO | 2019168399 A2 | 06-09-2019 |
| WO 2017089120 | A1 | 01-06-2017 | NONE | | |

EPO FORM P0459

For more details about this annex : see Official Journal of the European Patent Office, No. 12/82